# EUROPEAN PATENT APPLICATION

(11) **EP 2 161 599 A1**
(43) Date of publication of application: **10.03.2010**
(21) Application number: 08105222.7
(22) Date of filing: 04.09.2008
(51) Int. Cl.: G02B 6/00, G05G 1/10

(54) **Cylindrical light guide and illuminating device**

(71) Applicant: ROBERT BOSCH GMBH, 70442 Stuttgart (DE)
(72) Inventor: Tan, Woei Yuh, 11900, Bayan Lepas, Penang (MY)

(57) **Abstract**

The present invention provides a light guide. The light guide comprises a hollow cylinder (2) having a side wall for guiding light, a top surface (6) for emitting the light, and a bottom surface (7). Further, the light guide comprises a rod (3) attached perpendicularly to the side wall at the level of the bottom surface (7) for injecting light into the hollow cylinder (2). The bottom surface (7) has facets (10,12) inclined with respect to an angular direction of the hollow cylinder (2) and an axial direction of the hollow cylinder (2) for deflecting the injected light from an angular direction towards the top surface (6) and wherein at least one (10) of the facets is arranged on a far side of the side wall (5) with respect to the rod.

## Description

### BACKGROUND OF THE INVENTION

The present invention relates to a light guide and an illuminating device. The light guide and the illuminating device may be formed as an annular illuminating device for a rotary knob.

Rotary knobs are common operating controls and are used for instance for audio apparatus or automobile equipment. It is known to illuminate the rotary knobs with a halo ring as a design feature and to improve its usability in the dark.

US 6,334,688 B1 discloses an illumination device for a rotary knob. A tubular light guiding member receives light from a light source. A slanted facet at a bottom side of the light guiding member is provided with a mirroring layer and injects the light into the side wall of the tubular light guiding member. The light travels in a helical fashion upwards to a top surface of the light guiding member where it is emitted and may be seen by an observer.

A uniform illumination over the whole annular top surface is desired.

### SUMMARY OF THE INVENTION

The present invention provides a light guide. The light guide comprises a hollow cylinder having a side wall for guiding light, a top surface for emitting the light, and a bottom surface. Further, the light guide comprises a rod attached perpendicularly to the side wall at the level of the bottom surface for injecting light into the hollow cylinder. The bottom surface has facets inclined with respect to an angular direction of the hollow cylinder and an axial direction of the hollow cylinder for deflecting the injected light from an angular direction towards the top surface and wherein at least one of the facets is arranged on a far side of the side wall with respect to the rod.

The facets caved into the bottom surface deflect a desired porting of light into the direction of the top surface. Their placement in axial direction and their dimension in the axial direction can be used to determine the amount of light which is redirected. Their inclinations with respect to the top surface define the sections on the top surface which are illuminated by the redirected light.

According to a further aspect an illuminating device comprises the above light guide and a light source coupled to the rod.

### BRIEF DESCRIPTION OF THE DRAWINGS

The instant invention will be explained based on embodiments and following figures. The figures show:
- Fig. 1: a light guide in a dimensional view,
- Fig. 2: the light guide in a side view,
- Fig. 3: the light guide bottom view,
- Fig. 4: an illustration of illuminated sections of a top surface of the light guide,
- Fig. 5: a partial view of a bottom area of the light guide,
- Fig. 6: a dimensional view from a front side on the light guide, and
- Fig. 7: a dimensional view from a bottom side on the light guide.

### DETAILED DESCRIPTION OF THE INVENTION

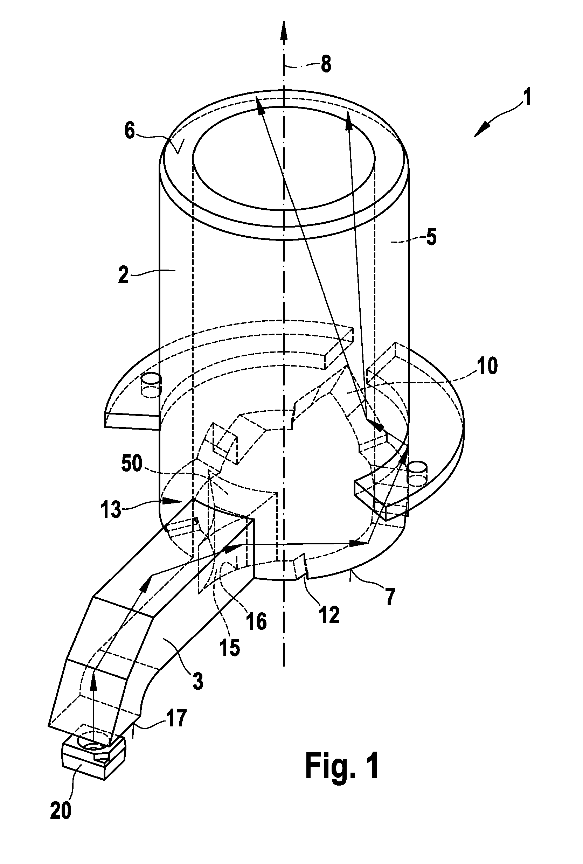

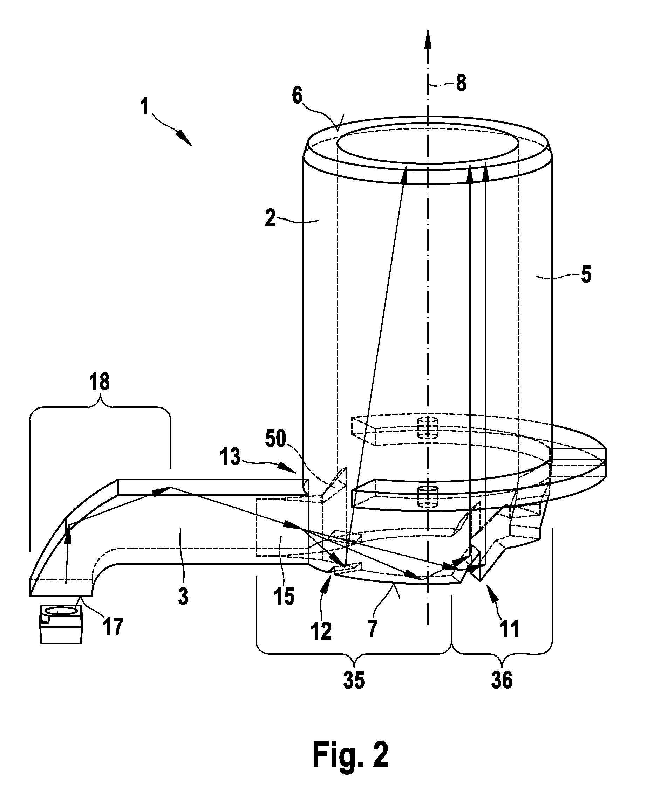

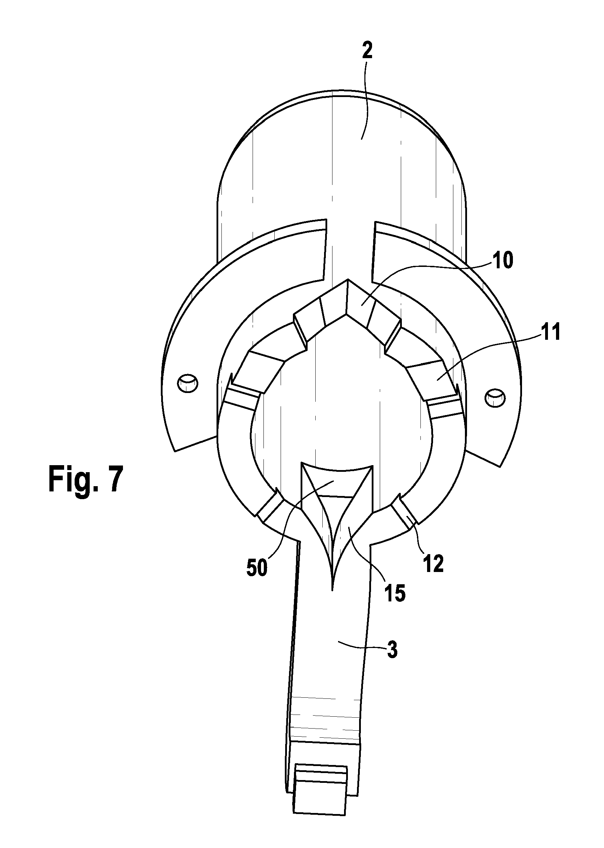

An embodiment of a light guide 1 is shown in several views in Fig. 1 to 7. The light guide 1 comprises two parts: a hollow cylinder 2 and a rod 3. The hollow cylinder 2 and the rod 3 are made of a transparent material, for instance of a transparent polymer. They can be manufactured as one piece by a die-casting process, for instance.

The hollow cylinder 2 is formed by a sidewall 5, a top surface 6 and a bottom surface 7. The top surface 6 and the bottom surface 7 are arranged basically in parallel and delimit the extension of the hollow cylinder 2 along its axis 8.

The sidewall 5 is formed such that the hollow cylinder 2 has a tubular shape, in particular of a round, circular or elliptical cross-section. A thickness of the sidewall 5 may be constant along a circumference of the hollow cylinder 2. The thickness may have a thickness of a few millimetres, for instance at least 1 mm, at the most 5 mm.

The top surface 6 is basically flat and corresponds to the cross-section of the hollow cylinder 2 perpendicular to its axis 8. The top surface 6 may be slanted with respect to the axis 8.

The bottom surface 7 is structured with several facets 10, 11, 12. The facets 10, 11, 12 are orientated so a normal on the facets 10, 11, 12 is tangential to the sidewall 5 in the area of the facet 10. There may be at least two facets 10, 11, 12, for instance at least four or at least six facets. The facets 10, 11, 12 divide the sidewall 5 in several sections along the circumference of the hollow cylinder 2.

The rod 3 may be of an elongated shape. Its cross-section along its smaller dimensions may be circular, elliptical, rectangular, or quadratic, for instance. The rod 3 may be solid or hollow.

A first end of the rod 3 is connected with a sidewall of the hollow cylinder 2. A junction 13 of the rod 3 and the hollow cylinder 2 is arranged close to the bottom surface 7 of the hollow cylinder 2. The rod 3 is about perpendicular to the sidewall 5.

The rod 3 may be slitted at its first end. The slit 15 may extend through the sidewall 5 in the area of the junction into the rod 3. The slit 15 may have a wedge- like shape and its symmetry axis 8 may be orientated in parallel to the axis 8 of hollow cylinder 2. The angled surfaces 16 of the slit 15 may provide planar or convexly curved faces of the rod 3. A vertical extension of the slit 15, i.e. parallel to the axis 8 of the hollow cylinder 2, is smaller than the vertical dimension of the first end. The vertical extension of the slit 15 may be a half up to two thirds of the vertical size of the first end. The slit 15 may be flush with a bottom surface 7 of the hollow cylinder 2 in the area of the junction 13.

A second end of the rod 3 may have a bent section 18. An end facet 17 at the second end of the rod 3 may be parallel to the bottom surface 7 of the hollow cylinder 2 due to the bent section 18. A further embodiment may contain no bent section 18 and, hence, the end facet 17 is parallel to the sidewall 5 of the hollow cylinder 2.

An illumination device may use the end facet 17 of the rod 3 as inlet facet. A light source 20, e.g. a light emission diode, may inject light into the inlet (end) facet. The rod 3 acts as a light guide for the injected light. The light is deflected by the bent section 18 into a direction towards the hollow cylinder 2. The angled surfaces 16 of the slit 15 deflect the light into the sidewall 5 of the hollow cylinder 2. The light is guided by the sidewall 5 along the circumference of the hollow cylinder 2. As the rod 3 is arranged perpendicular to the hollow cylinder 2 the light remains basically in a plane parallel to the bottom surface 7 of the hollow cylinder 2. The facets carved into the bottom surface 7 deflect the light towards the top surface 6 of the hollow cylinder 2. The inclination of the facets is such that the light travels inside of the sidewalls 5 an inclined in a range of -20° to 20° with respect to the axis 8 of the hollow cylinder 2.

A first facet 10 is curved into the bottom surface 7. This section is placed on the far side or opposite side of the sidewall 5 with respect to the junction 13 area. The first facet 10 is in a 180° distance to the junction 13 as seen from the axis 8 of the hollow cylinder 2. The light travels half way round the circumference before it is deflected by the first facet 10. The first facet 10 may be formed by a single inclined plane. The first facet 10 is inclined in the range of 30° to 60°, for instance at least 40°, at the most 50° with respect to the bottom surface 7. A normal on the first facet 10 is about in a tangential plane of the sidewall in the area of the first facet 10. The facet may be orientated so its normal is inclined to the tangential plane by at the most 1°.

The first facet 10 may be defined as inclined with respect to a radial direction around the axis 8 of the hollow cylinder 2 and be inclined with respect to the axis 8 of the hollow cylinder 2. The radial direction at a point of the sidewall is determined by its tangent perpendicular to the axis 8 of the hollow cylinder 2. The axial direction is parallel to the axis 8 of the hollow cylinder 2.

The first facet 10 may be formed of several smaller faces. The orientation of the faces may differ by their inclination with respect to the top surface 6. The inclination may decline with increasing distance of the face with respect to the bottom surface 7, for instance. An embodiment has a concavely shaped first facet 10. A first light ray travelling close to the bottom surface 7 is deflected by a larger angle than a second light ray hitting the facet at a point more distant to the bottom surface 7. The inclination of the first facet 10 may decline by at the most 20° with rising distance from the bottom surface 7. The first facet 10 directs light to a first section of the top surface 6. The first section covers a quarter up to a half of the top surface 6, for instance at least a third.

A second facet 11 may be arranged in about 90° distance to the junction 13 area as seen from the axis 8 of the hollow cylinder 2. The second facet 11 is at about half the distance between the junction 13 area and the first facet 10. The second facet 11 is inclined in the range of 50° to 80°, for instance at least 60°, at the most 70° with respect to the bottom surface 7 or top surface 6. A normal on the second facet 11 is about in a tangential plane of the sidewall in the area of the second facet 11. The second facet 11 may be orientated so its normal is inclined to the tangential plane by at the most 1°.

The second facet 11 may be slightly concave. The inclination of the second facet 11 may decline by at the most 10° with rising distance from the bottom surface 7. The second facet 11 directs light to a second section of the top surface 6. The second section covers a quarter up to a eighth of the top surface 6, for instance at least a sixth.

The second facet 11 may have a smaller surface compared to the first facet 10.

The second facet 11 is placed in a more distant position to the top surface 6 than the first facet 10. A light bundle travelling along the bottom surface 7 is hence divided in a lower part and an upper part. The lower part hits the second facets 11 and is redirected by the second facet 11 towards the top surface 6. The upper part passes above the second facet 11 and hits the first facet 10 where it is redirected towards the top surface 6.

The bottom surface 7 may be closer to the top surface 6 in a first area 36 between the second facet 11 and the first facet 10 than in a second area between the rod 3 and the second facet 11. This first area 36 may be at the level of a top edge of the second facet 11, i.e. the edge closer to the top surface 6. This level may be equal to the bottom edge of the first facet 10, too.

The inclination of the second facet 11 with respect to the bottom surface 7 may exceed the angle for total reflection. The angle of total reflection is defined by the index of refraction of the transparent material and the index of refraction of the surrounding air. Therefore, some light may be transmitted through the second facet 11.

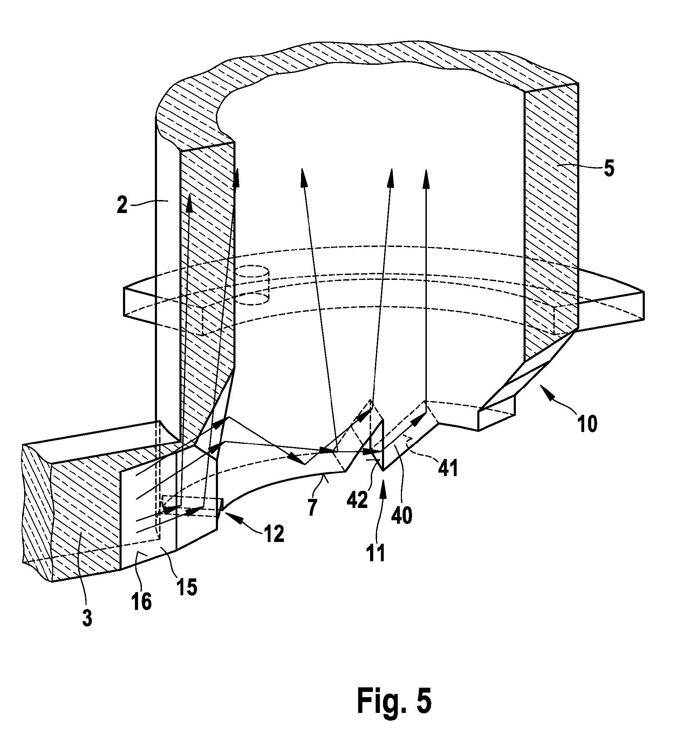

A wedge 40 may be formed in the first area 36 close to the second facet 11 (Fig. 5). The wedge 40 has a vertical facet on its side pointing towards the second facet 11 and an inclined backup facet 41 on its opposite side. The backup facet 41 may be arranged close to the second facet 11 displaced by some degrees as seen from the axis 8 of the hollow cylinder 2. The backup facet 41 may be of about the same size and orientation as the second facet 11. A bottom edge of the backup facet 41 and a top edge of the first facet 10 may be arranged in the same angular direction as seen from the axis 8 of the hollow cylinder 2. An inclination of the backup facet 41 with respect to the bottom surface 7 may be smaller than the inclination of the second facet 11. For instance, the inclination of the backup facet 41 may be chosen smaller than the angle of total reflection, e.g. less than 46° for a transparent material having an index of refraction of about 1.4.

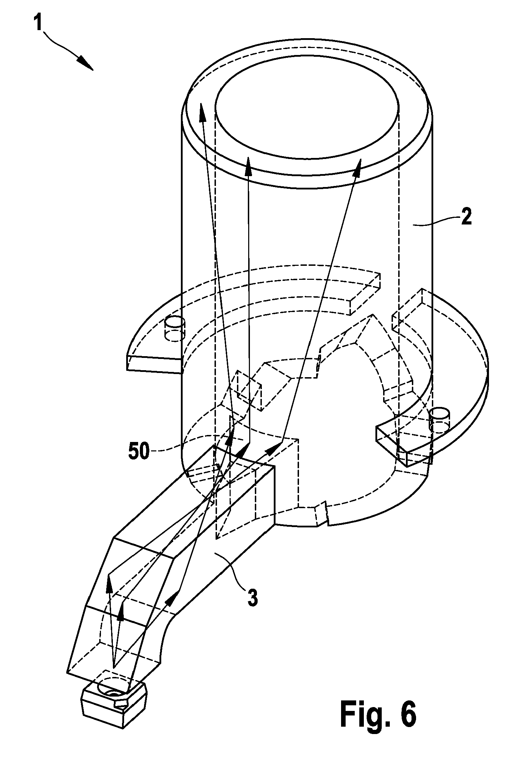

A third facet 50 may be provided in the junction area 13 above the slit 15 (Fig. 6). The third facet 50 is inclined by 10° up to 50° with respect to the rod 3. Light incoming from the rod 3 is directed towards the top surface 6 of the hollow cylinder 2 by the third facet 50.

The third facet 50 may be curved along an angular direction. A central section of the third facet 50 may be at a larger distance to the top surface 6 than a marginal section. Light falling onto the central section is redirected in a direction parallel to the axis 8 of the hollow cylinder 2 and illuminates a part of top surface 6 just above the rod 3. Light falling onto the marginal sections are redirected in a direction inclined with respect to the axis 8. The third facet 50 directs light to a third section of the top surface 6. The third section covers a quarter up to a half of the top surface 6, for instance at least a third.

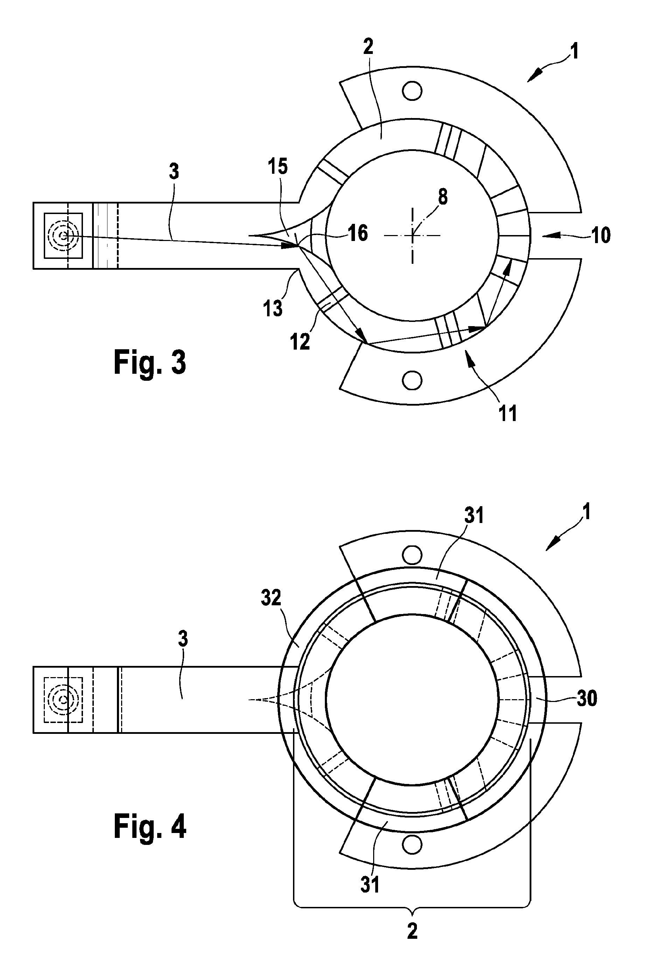

The top surface 6 may be divided in four sections, twice the second section for symmetry reasons and the first and third sections (Fig. 4). These sections are mainly illuminated with light redirected by the corresponding second, first or third facets 50.

Other embodiments may use more than three facets along one side of the circumference. A light bundle injected by the rod 3 can be divided into more than three parts. Each of the facets redirects one part towards the top surface 6. The bottom surface 7 may be levelled by the facets. An area between two neighbouring facets may be at a constant level, i.e. constant distance to the top surface 6. Each level may be defined by the top edge of the one of the facets which is closer to the rod 3.

An inner diameter of the hollow cylinder 2 depends on the use of the light guide 1. A typical knob may have an outer diameter in the range of 10 mm to 40 mm. The inner diameter of the hollow cylinder 2 can be chosen accordingly so the hollow cylinder 2 fits around the knob or into a ring- shaped recess in knob designed to be illuminated.

## Claims

1. A light guide comprising:
a hollow cylinder (2) having a sidewall (5) for guiding light, a top surface (6) for emitting the light, and a bottom surface 7,
a rod (3) attached perpendicularly to the sidewall (5) at the level of the bottom surface (7) for injecting light into the hollow cylinder 2,
wherein
the bottom surface (7) having facets (10, 11, 12) inclined with respect to an angular direction of the hollow cylinder (2) and an axial direction of the hollow cylinder (2) for deflecting the injected light from an angular direction towards the top surface (6) and wherein at least one of the facets (10, 11, 12) is arranged on a far side of the sidewall (5) with respect to the rod (3).

2. The light guide according to claim 1, wherein a further one of the facets (10, 11, 12) is arranged on a circumference of the bottom surface (7) between the rod (3) and the at least one facet (10, 11, 12) and wherein the at least one facet is arranged closer to the top surface (6) than the further one of the facets (10, 11, 12).

3. The light guide according to claim 1 or 2, wherein two of the facets (10, 11, 12) are arranged in close neighbourhood so light transmitted through a first of the two facets (10, 11, 12) is deflected by a second of the two facets (10, 11, 12) towards the top surface (6).

4. The light guide according to one of the preceding claims, wherein the rod (3) is provided with a slit (15) in the area of its junction (13) with the sidewall (5) to form further facets (10, 11, 12) which are inclined with respect to a radial direction of the hollow cylinder (2) and the angular direction of the hollow cylinder (2) for deflecting the light from the rod (3) into the sidewall (5) of the hollow cylinder (2).

5. The light guide according to one of the preceding claims, wherein a further facet (50) is arranged in the area of a junction (13) of the rod (3) with the sidewall (5) and the further facet (50) is orientated to redirect light incoming from the rod (3) towards the top surface (6).

6. The light guide according to one of the preceding claims, wherein one rod (3) is provided as the only light injecting device.

7. The light guide according to one of the preceding claims, wherein at least one of the facets (10, 11, 12) has a curved shape with respect to the axis (8) of the hollow cylinder (2).

8. The light guide according to one of the preceding claims, wherein the hollow cylinder (2) and the rod (3) are made of the same transparent material.

9. An illuminating device comprising a light guide according to claim 1 and a light source (20) coupled to the rod (3).
